# EUROPÄISCHE PATENTSCHRIFT

(11) **EP 1 648 191 B1**
(45) Veröffentlichungstag und Bekanntmachung des Hinweises auf die Patenterteilung: **31.03.2010**
(21) Anmeldenummer: 05022715.6
(22) Anmeldetag: 18.10.2005
(51) Int. Cl.: H04Q 9/00, H04B 1/69

(54) **Vorrichtung zur Funkübertragung von Verbrauchsdaten mittels trägerloser Basisbandimpulsausbreitung**
Device for radio transmission of utility data via ultra-wide-band communication system
Dispositif de transmission de données de consommation à l'aide d'un système de communication à bande ultra-large

(30) Priorität: 18.10.2004 DE 102004050658
(43) Veröffentlichungstag der Anmeldung: 19.04.2006
(73) Patentinhaber: METRONA WÄRMEMESSER UNION GMBH, 81379 München (DE)
(72) Erfinder: Heckmann, Dieter, 81475 München (DE); Nistor, Dan, 82418 Murnau (DE)
(74) Vertreter: Becker Kurig Straus

(56) Entgegenhaltungen:
- EP-A- 1 124 211
- DE-A1- 10 132 971
- US-A1- 2004 017 841
- US-A1- 2004 203 697
- AIELLO G R ET AL: "Ultra-wideband wireless systems" Juni 2003 (2003-06), IEEE MICROWAVE MAGAZINE, IEEESERVICE CENTER, PISCATAWAY, NJ, US, PAGE(S) 36-47 , XP002272335 ISSN: 1527-3342 * Seite 37, linke Spalte, Absatz 2 - rechte Spalte, Absatz 1; Abbildung 9 * * Seite 39, linke Spalte, Absatz 2 - rechte Spalte, Absatz 1 *

## Beschreibung

Die vorliegende Erfindung bezieht sich auf Vorrichtungen, welche trägerlose Basisbandimpulsausbreitung (TBI) (auch als Ultra-Wide-Band UWB bekannt) für die Funkdatenübermittlung von Verbrauchsdaten von Heizkostenverteilern, Wasser-, Wärme-, Strom- und Gaszählern verwenden.

Bekannt ist eine Erfassungsvorrichtung für Wärmeverbrauchsdaten aus der DE 10132971 A1.

Trägerlose Basisimpulsausbreitung funktioniert generell ohne zuzuordnende Funkträgerfrequenz und eröffnet dadurch wesentliche Vorteile für die Kurzstreckendatenübertragung innerhalb von Gebäuden, sowohl in rein technischer Hinsicht als auch im Hinblick auf genehmigungsrechtliche Fragestellungen.

Bis in die jüngste Vergangenheit waren entsprechende Funkverfahren wegen einem enormen technischen und finanziellen Aufwand weitgehend der militärischen und wissenschaftlichen Anwendung vorbehalten. Diese Situation ändert sich fortlaufend, und die spezifischen Gegebenheiten der Branche "Heizkostenverteilung / Wärmedienste" in Verbindung mit den spezifischen Eigenschaften notwendiger elektronischer Systemkomponenten für Sender- und Empfängereinheiten und deren technische Weiterentwicklung eröffnen in absehbarer Zeit die kommerzielle Anwendungsmöglichkeit.

Die Funkübertragung der Verbrauchsdaten von Heizkostenverteilern, Wasserzählern, Wärmezählern und Impulszählermodulen (z.B. für Gas- oder Stromzähler) - im folgenden zusammenfassend als "Verbrauchszähler" bezeichnet - zu fest installierten oder mobilen Datensammlern wird nach derzeitigem Stand der Technik durch Verwendung einer Schmalband-Trägerfrequenztechnik unter Nutzung der lizenzfreien Frequenzbänder 433 bis 434 MHZ, 868 bis 870 MHz oder 2,45 GHz realisiert. Die Mehrzahl der kommerziell verfügbaren Systeme nutzt dabei das Band 868-870 MHz.

Kennzeichnend für die branchenüblichen Funkdatenerfassungssysteme ist zunächst, dass in aller Regel die Anzahl der "Sendereinheiten", also der Verbrauchszähler, die der "Empfängereinheiten", also der Datensammler, um ein Vielfaches übersteigt. In der Praxis existieren meist 20-50 Verbrauchszähler pro Datensammler. Im Hinblick auf eine effektive Massenproduktion steht ein kostengünstiger Aufbau der Sendereinheiten also im Vordergrund, während bei der Ausstattung der Empfängereinheiten ein höherer technischer Aufwand betrieben werden kann. Die Sendereinheiten werden innerhalb einzelner Wohneinheiten im Bereich der Privatsphäre betrieben; ihr wartungsfreier Betrieb muss über einen Zeitraum von zehn Jahren sichergestellt sein. Die Empfängereinheiten befinden sich zumeist im allgemein zugänglichen Raum, wo eine Ablesung / ggf. Wartung durch den Wärmedienst jederzeit vorgenommen werden kann.

Aufgrund der geringen zur Verfügung stehenden Bandbreite der (meistgenutzten) Frequenzbänder unterhalb von 1 GHz (1,6 MHz im 433 MHz-Band, 2 MHz im 868 MHz-Band), ergeben sich physikalische Obergrenzen von typisch 4800 bis 38400 Bits pro Sekunde als maximal erzielbare Bitraten, mit denen die Sendeeinrichtungen moduliert werden können. Je nach Menge zu übertragender Daten ergeben sich damit Telegrammlängen zwischen etwa 20 und 100 ms.

Oft existieren in großen Liegenschaften Ensembles hunderter von Verbrauchszählern, welche, ausgelöst durch ihre eigenen Uhren, individuell und unsynchronisiert zu senden beginnen. Dadurch ergibt sich eine bestimmte Wahrscheinlichkeit für die gegenseitige Überlagerung und dadurch ggf. Auslöschung der von wenigstens zwei Verbrauchszählern gleichzeitig gesendeten Funksendungen. Entsprechende Verluste von Funktelegrammen werden zwar durch unregelmäßig wiederholtes Senden ein und desselben Funktelegramms in bestimmten Sendezeitfenstern verringert, jedoch stellt die begrenzte Energiemenge der in Verbrauchszählern eingebauten (Lithium-)Batterie einen limitierenden Faktor für den Wiederholungsfaktor der Telegramme dar.

Zusammenfassend kann festgestellt werden, dass die derzeit im Markt verwendeten Systeme limitiert sind im Hinblick auf Übertragungssicherheit (Störfestigkeit), Datenübertragungsraten und Übertragungsdauer der Funkbotschaften. Weiterhin besteht aus wirtschaftlichen Gründen die Notwendigkeit, technisch unaufwendige Sendeeinheiten herzustellen.

Die Aufgabe der vorliegenden Erfindung besteht daher darin, Vorrichtungen bereitzustellen, welche diese oben genannten Nachteile beseitigen oder zumindest weitgehend reduzieren, so dass entscheidende Vorteile gegenüber den herkömmlichen Schmalbandsystemen erhalten werden. Eine weitere Aufgabe liegt darin, dass eine Vorrichtung angegeben wird, die andere (insbesondere Schmalband-) Funkvorrichtungen nicht stört, von diesen nicht gestört wird und Kosten sparend mit geringem Energiebedarf betrieben werden kann.

Gemäß der vorliegenden Erfindung wird eine Datensammler-Vorrichtung nach Anspruch 1 bereitgestellt. Die erfindungsgemäße Vorrichtung umfasst eine Verarbeitungseinrichtung zur Verwaltung der Verbrauchsdaten und zur Steuerung der Vorrichtung. Der bereitgestellte Speicher speichert die Verbrauchsdaten. Zur Identifizierung stellt die Verarbeitungseinrichtung ein Identifizierungsmodul bereit, welches einen Identifikationscode enthält. Der Identifikationscode wird für jede entsprechende Vorrichtung eineindeutig bereitgestellt. Weiter wird ein TBI-Funkmodul bereitgestellt, der die Verbrauchsdaten empfangt und weiterleitet. Für die Steuerung von zeitabhängigen Operationen des TBI-Funkmodul wird die Verarbeitungseinrichtung mit einem Zeitsteuerungsmodul gekoppelt.

In einer alternativen Ausführung werden das Metall der Heizkörper und die Metallrohre des Heizmediums bzw. die metallischen Wasserleitungen der Wohn- und Gewerbegebäude genutzt, um TBI-Signale zu übertragen. In diesem Fall ist nur ein Anschluss bzw. Kontakt für die Übertragung des Sendesignals vorgesehen.

Es wird vorgesehen, dass das TBI-Funkmodul einen TBI-Empfänger umfasst. Dies erlaubt ein drahtloses Empfangen sowie Speichern der durch eine weitere Vorrichtung gesendeten Verbrauchsdaten. Somit kann vorteilhafterweise ein Netzwerk realisiert werden. Bevorzugt weist das Netzwerk zwei Vorrichtungen auf, von denen die eine eine Vorrichtung mit TBI-Sender und die andere eine Vorrichtung mit TBI-Empfänger ist, so dass das Netwerk entsprechend als Datensammler und Heizkostenverteiler ausgebildet werden kann.

Gemäß der Erfindung umfasst die Vorrichtung ferner ein Haupt-Funkmodul zur Kommunikation mit einem Weitverkehrsnetz zum Senden der in dem Speicher gespeicherten Wärme-Verbrauchsdaten, wobei das Haupt-Funkmodul mit der Verarbeitungseinrichtung verbunden ist. Infolgedessen kann die Anbindung an bereits existierende Mobilfunknetzwerke leicht realisiert werden.

Gemäß der Erfindung umfasst das Haupt-Funkmodul ein GSM-Modul, welches die Wärme-Verbrauchsdaten über ein GSM-Mobilfunknetzwerk weiterleitet. Dies ist vorteilhaft, da eine existierende GSM-Infrastruktur für die Übertragung der Wärme-Verbrauchsdaten verwendet werden kann. Die Verarbeitungseinrichtung bzw. das Zeitsteuerungsmodul steuert das GSM Modul mittels eines Sende- bzw. Empfangsprotokolls, mit dem die Sendezeiten bzw. Empfangszeiten vorbestimmt werden. Die Protokolle lassen sich über eine Schnittstelle vom GSM Modul empfangen und speichern.

Es wird bevorzugt, dass das Identifizierungsmodul ein SIM-Modul umfasst. Das SIM-Modul (Subscriber Identity Module) erlaubt die genaue Identifizierung der Vorrichtung mittels einer darin integrierten Chip-Karte. Ein weiterer Vorteil ist, dass die Chip-Karte portabel ist und von einer Vorrichtung in die andere übertragen werden kann.

In einer Ausführungsform ist die Vorrichtung angepasst, um Signale in ein metallisches Heizmedium- oder Wasserleitungsrohrsystem einzukoppeln bzw. daraus auszukoppeln, um das metallische Rohrsystem als Signal-Übertragungsmedium zu verwenden. Durch die Nutzung der Leitungssysteme kann die Weiterleitung der Signale auch in Situationen erfolgen, in denen z.B. gebäudebedingte Signaldämpfungen ansonsten eine fehlerfreie Übertragung verhindern, bzw. die Empfangsreichweite kann ggf. erhöht werden.

Die Erfindung wird im Folgenden im Zusammenhang mit den vorstehend beschriebenen Ausführungsformen konkretisiert. Es ist jedoch zu verstehen, dass die Erfindung nicht auf diese Ausführungsformen beschränkt sein soll.

Im Folgenden wird die vorliegende Erfindung detailliert beschrieben werden, auch unter Bezug auf die beigefügte Zeichnung, in welcher:
- Fig. 1: eine schematische Darstellung einer ersten Ausführungsform der Vorrichtung zeigt, die ein Haupt-Funkmodul umfasst;
- Fig. 2: ein Blockdiagramm zeigt, das eine Erfassungseinheit umfasst (nicht Bestandteil der Erfindung);
- Fig. 3: eine Empfangseinrichtung zum Empfang trägerloser Basisband-Signale gemäß der Erfindung zeigt;
- Fig. 4: eine Sendereinrichtung für trägerlose Basisband-Signale zeigt;
- Fig. 5: den Aufbau einer Sendereinheit schematisch zeigt; und
- Fig. 6: den Aufbau einer Empfängereinheit gemäß der vorliegenden Erfindung schematisch zeigt.

Ein trägerlos arbeitendes Funkübertragungsverfahren, auch Basisband-Impulsausbreitung genannt, emittiert elektromagnetische Wellen (und damit Energie) nicht innerhalb eines schmalen Frequenzbereiches (also auf einer Trägerfrequenz) sondern - im Idealfall - verteilt über das gesamte Frequenzspektrum (daher auch Ultra Wide Band). Zum Einsatz kommen entweder eine Subnanosekunden-Impulsbreitenmodulation oder eine Subnanosekunden-Impulsfolgemodulation. "Subnanosekunden-Impuls" bezeichnet in diesem Zusammenhang einen elektronischen Schaltvorgang, der typisch weniger als eine Nanosekunde in Anspruch nimmt. Informationsträger ist nicht eine Amplituden- oder Frequenzmodulation innerhalb eines eng begrenzten Frequenzbereiches, sondern jeweils ein spezifisches spektrales "Muster", welches durch aufwendigere Filtertechnik auf Empfängerseite rekonstruiert und identifiziert werden muss.

Jeder einzelne Subnanosekundenimpuls erzeugt grundsätzlich ein sehr viel breiteres Spektrum an (abgestrahlten) Frequenzen, verglichen mit typischen Schaltzeiten bei aktuell verwendeten Hochfrequenzträgern. Prinzipiell werden von Schaltimpulsen im mehrstelligen Picosekundenbereich Frequenzanteile vom DC-Bereich bis in den GHz-Bereich hinein erzeugt. Die einzelnen Spektralkomponenten weisen damit jedoch eine sehr viel geringere Spektralleistung von ca. -40dBm auf, da sich die abgestrahlte Leistung naturgegeben auf das breitere Spektrum verteilen muss. Mit -40dBm gehen die spezifischen spektralen Anteile an jeder beliebigen Stelle im Spektrum im Rauschen unter, verursachen also keinerlei Störungen auf anderweitig genutzten Frequenzbändern.

Die zu übertragende Information wird in der Variation/Modulation von Impulsbreite und/oder Impulsreihenfolge hinterlegt. Der für die Rückgewinnung der Information ausgenutzte Frequenzbereich liegt dabei oberhalb von 3GHz bei einer Bandbreite von mindestens fünf GHz. Die Empfänger solcher Subnanosekundenimpulsfolgen nutzen Faltungstechniken, um die in den Impulsfolgen und/oder -breiten hinterlegte Information zurückgewinnen; die zentrale notwendige Voraussetzung, um bestimmte spektrale Signalbeiträge im Rauschen zu identifizieren/filtern.

Für Sendeeinrichtungen, die mit trägerloser Basisband-Impulsausbreitung arbeiten, gilt, dass die erzielbaren Nettobitraten der Funkübertragung um Faktoren höher liegen als diejenigen der Schmalbandsysteme. Damit kann die Länge von Funktelegrammen von Verbrauchszählern substantiell verkürzt werden. In direkter Folge sinkt die Wahrscheinlichkeit für die Überlappung von Funkbotschaften, damit auch die notwendigen Wiederholungsraten und der für den Langzeit-Sendebetrieb erforderliche Energiebedarf. Insbesondere ist der Energieaufwand bei der trägerlosen Basisband-Impulsausbreitung unabhängig von der angestrebten Datenübertragungsrate.

Ein weiterer Vorteil des TBI-Sendeverfahrens für Heizkostenverteiler, Wasser- und Wärmezähler ist die hohe Robustheit gegenüber Schmalbandstörern, die durch ihr begrenztes Spektrum nur geringe Teile der spektralen Komponenten der trägerlosen Basisband-Impulsausbreitung überlappen können.

Weiterhin ist das TBI-Verfahren robuster (im Vergleich zu Schmalbandsystemen) gegenüber der zeitgleichen Ausstrahlung anderer, ebenfalls mit trägerloser Basisband-Impulsausbreitung arbeitender Sendeeinrichtungen. Dies ist gerade dadurch bedingt, dass die Art der Impulsfolge sich in der Verteilung der spektralen Komponenten niederschlägt, was daher in begrenztem Umfang eine zeitgleiche Übertragung mehrerer Sendeeinrichtungen mehrerer Verbrauchszähler erlaubt, sofern der Empfänger der Empfangs- und Speichereinrichtung (Datensammler) so ausgelegt ist, dass er in der Lage ist, zeitgleiche Korrelationen bzgl. der Verteilung der spektralen Komponenten aufzulösen.

Die Übertragungssicherheit bei TBI - bezogen auf Funkstrecken von typisch einigen Metern bis etwa 20 Metern - wird weiterhin dadurch begünstigt, dass mit der drastisch verkürzten Länge der Funkbotschaften Reflexions- und Interferenzeffekte einer Funkbotschaft mit sich selbst weitgehend vermieden werden (Fachterminus: "multipath immunity"). Die räumliche Ausbreitungsgeschwindigkeit elektromagnetischer Wellen beträgt etwa 30cm pro Nanosekunde, so dass für eine Vielzahl von Fällen keine zeitliche Überlagerung, sprich Auslöschung, von primärem Wellenzug mit eventuellen Reflexionen stattfinden kann.

Subnanosekunden-Impulserzeuger - d.h. die "Sendereinheiten" - lassen sich relativ unaufwendig, d.h. kostengünstig und betriebszuverlässig konstruieren, kommen demnach den wirtschaftlichen Anforderungen für Verbrauchszähler direkt entgegen.

Auf der Empfängerseite hingegen liegen die technischen Herausforderungen bei der Datenübermittlung mittels TBI. Hier geht es prinzipiell um eine Spektralanalyse in Realzeit, d.h. um Erfassung und Identifizierung spektraler Komponenten oder veränderlicher Muster auf der Skala von Nanosekunden. Prinzipiell existieren verschiedene Verfahren zur Identifizierung/Filterung von spektralen Anteilen, welche hier unter dem Begriff FSA ("Fast Spectrum Analysis/Analyzer") zusammengefasst werden. Zusätzlich ist wegen der extrem niedrigen Signalpegel der einzelnen spektralen Anteile (typisch -50 bis -40 dBm) ein leistungsfähiger rauscharmer Vorverstärker ("Low Noise Amplifier" LNA) notwendiger Bestandteil jeder Empfangseinheit.

Von der Verfügbarkeit integrationsfähiger (ggf. miniaturisierter) und verhältnismäßig kostengünstiger Bausteinkomponenten für FSA und LNA hängt die Realisierbarkeit eines kommerziell einsetzbaren TBI-Systems für den Bereich Verbrauchzählung wesentlich ab.

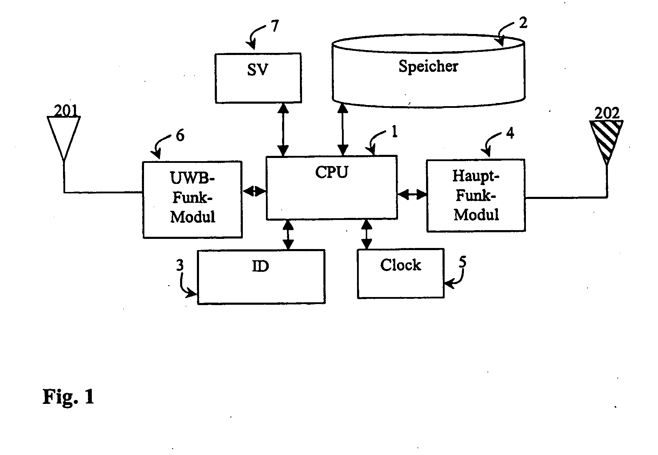

Fig. 1 repräsentiert ein Blockdiagramm, der erfindungsgemäßen Vorrichtung, die als Datensammler in einem Netz verwendbar ist. Es wird eine zentrale Verarbeitungseinrichtung 1 der Vorrichtung dargestellt. Diese wird verwendet, um alle möglichen Operationen zu steuern. Innerhalb der Verarbeitungseinrichtung wird ein Softwareprogramm installiert und ausgeführt, welches alle in der Vorrichtung eingeschlossenen Einheiten steuert.

Die Verarbeitungseinrichtung 1 ist verbunden mit einem Speicher 2, in dem alle wichtigen Daten, wie Verbrauchsdaten gespeichert werden. Intern verfügt die Verarbeitungseinrichtung über einen Zusatzspeicher, der zur Zwischenspeicherung oder anderen betriebsinternen Operationen dient. Es ist bevorzugt, dass der Speicher 2 mit einem Erweiterungsspeicher ausgestattet wird, so dass eine Vergrößerung der Speicherkapazität erreicht werden kann. Der Speicher 2 wird als nichtflüchtiger Speicher realisiert, um zu vermeiden, dass bei Verlust der Spannungsversorgung wichtige Daten verloren gehen. Auch bevorzugt ist die Verwendung eines so genannten Backup-Speichers, der die Daten des Speichers 2 vollständig spiegelt und im Fehlerfall wiederherstellen kann. Alle Speicherzugriffe, Lese- oder Schreibeoperationen werden mit Hilfe der Verarbeitungseinrichtung 1 durchgeführt.

Um eine genaue Identifizierung der Vorrichtung zu ermöglichen, wird die Vorrichtung mit einem Identifizierungsmodul 3 erweitert, das ebenfalls mit der zentralen Verarbeitungseinrichtung 1 verbunden ist. Das Modul 3 stellt einen eindeutigen Identifizierungscode bereit, der es möglich macht, die Vorrichtung unter einer Vielzahl von Vorrichtungen zu identifizieren. Das Identifizierungsmodul 3 kann ein SIM-Modul beinhalten zum Betrieb in einer GSM-Infrastruktur. Das SIM-Modul umfasst eine Chip-Karte, die jede Vorrichtung genau identifiziert. Diese Chip-Karte ist portabel und kann von einem Gerät zum nächsten übertragen werden. Die Chip-Karte erlaubt das Einwählen in ein lokal verfügbares Funknetzwerk und kann aber auch als Speichermedium dienen, um verschiedene Verbraucherinformationen zu speichern. Die vorhandene Infrastruktur des Netzbetreibers kann somit in Anspruch genommen werden.

Ferner ist ein mit der Verarbeitungseinrichtung 1 verbundenes Zeitsteuerungsmodul 5 vorgesehen. Die Verarbeitungseinrichtung verwendet Informationen des Zeitsteuerungsmoduls 5, um beispielsweise getaktete Operationen durchzuführen oder um das Haupt-Funkmodul 4 zu steuern. Da der Sender nur für bestimmte Zeitfenster in Betrieb genommen werden muss, wird ein wirtschaftlich vorteilhafter Umgang mit Energie zur Speisung der Vorrichtung erreicht. Die Einheit 7 stellt die Stromversorgung der Vorrichtung dar und wird durch handelsübliche Batterien oder Akkus realisiert, um einen wirtschaftlich vorteilhaften Betrieb zu gewährleisten.

Ein TBI-Funkmodul 6 stellt die zentrale Einheit der TBI-Datenübertragung dar. Die Antenne 201 ist so angepasst, dass sie die TBI-Signale empfängt und an das TBI-Funkmodul weiterleitet. Das Nutzfrequenzband der TBI-Techniken liegt zwischen 3GHz und ca. 10GHz und die Spektralleistung jeder einzelnen Spektralkomponente ist auf ca. -40 dBm begrenzt. Das Verhältnis *B_{w}*/*F*₀ ist in der Regel nahe 1. Die ausgesandte Energie aus einem dafür vorgesehenen Frequenzband wird empfangen und an das TBI-Funkmodul 6 weitergeleitet. Der darin enthaltene TBI-Empfänger detektiert die gesendeten Daten und decodiert diese anschließend, so dass die ursprünglichen Daten verfügbar sind.

Nachdem die Verbrauchsdaten empfangen wurden und, falls gewünscht, gespeichert wurden, kann eine anschließende Weiterverarbeitung der Wärme-Verbrauchsdaten durchgeführt werden.

Ein Haupt-Funkmodul 4 und dessen zugehörige Antenne dienen zur Weiterleitung der Wärme-Verbrauchdaten an ein Mobilfunknetzwerk. Bevorzugt kann das GSM-Mobilfunknetzwerk verwendet, werden, um die bereits vorhandene Netzinfrastruktur in Anspruch zu nehmen. Auch andere Netze, wie UMTS oder TETRA können verwendet werden. Die somit gesendeten Wärme-Verbrauchsdaten werden von einem Dienstleistungsunternehmen empfangen und zur Kostenberechnung verwendet werden.

Ferner kann Information durch das Dienstleistungsunternehmen an die erfindungsgemäße Vorrichtung gesendet werden, welche vom Haupt-Funkmodul empfangen wird und anschließend weiter verarbeitet werden kann.

Mit Hilfe der Verarbeitungseinrichtung kann eine periodische Übertragung der Wärme-Verbrauchsdaten realisiert werden. Falls ein Fehler in der Vorrichtung mit Hilfe der darin enthaltenen Selbstdiagnoseeinheit festgestellt wurde, kann das Dienstleistungsunternehmen automatisch benachrichtigt werden.

Ferner können Wärme-Verbrauchsdaten kontinuierlich ausgelesen werden, um den genauen Betrieb der Wärmequelle zu überwachen. Es ist auch bevorzugt, die erfindungsgemäße Vorrichtung mit einem Ventil, das die Wärmeabgabe an die Wärmequelle steuert, zu verbinden, um so zusätzlich eine Fernsteuerung der Raumtemperatur zu erreichen.

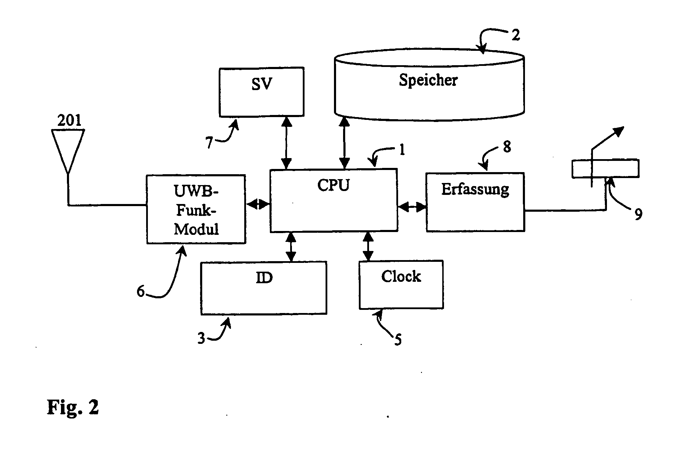

Fig. 2 schlägt eine nicht unter die der vorliegende Erfindung fallende Anordnung vor, welche als Heizkostenverteiler in einem Netz verwendbar ist. Diese Ausführungsform ist teilweise analog zu der Ausführungsform, welche anhand von Fig. 1 beschrieben wurde. Anstelle eines Haupt-Funkmoduls 4 (Fig. 1) wird ein Erfassungsmodul 8 eingesetzt und die Antenne 202 wird durch einen Temperatursensor 9 ersetzt. Die so veränderte Vorrichtung kann konkret als Wärme-Verbrauchszähler (Heizkostenverteiler) eingesetzt werden. Der Sensor 9 erfasst den Wärmeverbrauch und sein Ausgangssignal kann direkt zur Ermittlung der Wärmekosten benutzt werden.

Das TBI-Funkmodul 6 dient als zentrale Schnittstelle der Vorrichtung. Die Antenne 201 ist so entworfen, dass sie die vom TBI-Funkmodul 6 vorbereiteten Daten versenden kann. Ferner kann die Antenne 201 für eine bidirektionale drahtlose Kommunikation verwendet werden.

In einer anderen Ausführungsform werden die Signale des TBI-Funkmoduls 6 auf das Metall des Heizkörpers gekoppelt. Dabei dient das metallische Rohrsystem des Heizmediums als Übertragungsmedium.

Die für diese Übertragungstechnik benötigte Sendeenergie ist minimal, hat aber den Vorteil, dass die Übertragungsgeschwindigkeit (bei gegebener Reichweite und Fehlerrate) unabhängig von der Sendeleistung ist.

Die Sendertopologie, die im TBI-Funkmodul 6 enthalten ist, ist in der Regel einfach und leicht zu realisieren.

Durch die erfindungsgemäße Vorrichtung können somit die Wärme-Verbrauchsdaten vom Heizkostenverteiler zum Datensammler in binärer Form, und somit robust, übermittelt werden. Die aus dem Speicher 2 entnommenen Binärdaten werden mit einer vorbestimmten Wiederholungsrate einem Impulsformer oder Pulsformer, realisiert im UWB-Funkmodul, übergeben, der die Binärinformation in eine Subnanosekundenimpulsfolge bzw. Pulsreihenfolge umsetzt und die so geformte Energie an die Antenne 201 weiterleitet. Auch wenn Störungen im Übertragungskanal auftreten, werden diese die Übertragung nicht beeinflussen, da nur bestimmte Spektralkomponenten niedrigster Leistung und einem bestimmten Spektralbild ausgewertet werden. Dies ist bei altbekannten ISM-Übertragungsstrecken nicht realisierbar.

Ein weiterer Vorteil der beispielhaften Ausführungsformen der Vorrichtungen ist der geringe Energieverbrauch, so dass die Stromversorgung 7 minimal belastet wird im Vergleich zu den früheren Techniken.

Da die eingangs genannten ISM-Bänder zunehmend belastet werden, ist eine Datenübertragung im UWB-Band umso zuverlässiger.

Die anhand von Fig. 1 beschriebe Funktionalität der Vorrichtung kann weiterhin bestehen bleiben. Infolgedessen kann jede Heizung (Wärmequelle) in einer Liegenschaft mit einer erfindungsgemäßen Vorrichtung bestückt werden, um somit eine gezielte Fern-Ablesung bzw. Fernübertragung der Wärme-Verbrauchsdaten zu ermöglichen. Im Übrigen gelten alle in Verbindung mit Fig. 1 beschriebenen Merkmale auch sinngemäß für die in Fig. 2 beschriebene Ausführungsform.

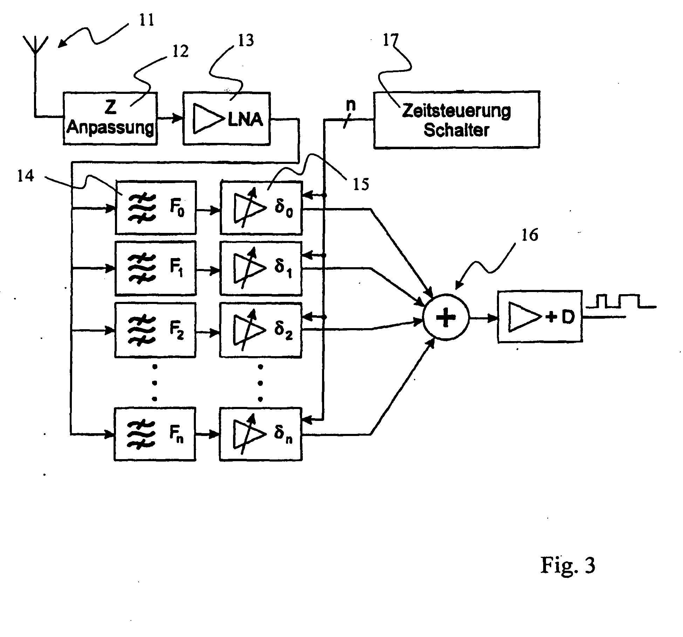

Fig. 3 zeigt eine Empfangseinrichtung zum Empfang trägerloser Basisband-Signale . Die Empfangseinrichtung umfasst eine Breitbandantenne 11 zum Empfang von TBI-Signalen (im Kontext der Erfindung also Signalen, die Information über die Verbrauchsdaten tragen), die sich auf ein sehr breites Frequenzspektrum verteilen, eine Einrichtung 12 zur Impedanzanpassung und Teillinearisierung der Antennenkennlinie zur Verbesserung der Empfangseigenschaften, und einen breitbandigen, rauscharmen Vorverstärker ("Low Noise Amplifier" LNA) zur Verstärkung der TBI-Signale, die wie vorstehend beschrieben nicht nur sehr breit in der Frequenz gestreut, sondern auch sehr schwach sind, d.h. an jeder Stelle unterhalb der Rauschgrenze liegen, und somit einen entsprechenden Verstärker benötigen.

Die Einrichtung umfasst weiter eine Anzahl mehrerer (n) Bandpassfilter 14, die mit dem LNA verbunden sind und jeweils mit einem Gruppenlaufzeitausgleich zur Kompensation auftretender unterschiedlicher Gruppenlaufzeiten versehen sind, für die Ausfilterung bestimmter einzelner Frequenzbereiche (F₀ bis Fₙ), wobei jeder der n Bandpassfilter 14 jeweils mit einem Verstärker 15 mit einstellbarem Verstärkungsfaktor verbunden ist. Die n Verstärker 15 sind torgesteuert, d.h. werden durch eine zentrale Torzeitsteuerung 17 gemäß einer Codevorgabe gesteuert, wobei diese Codevorgabe dem zu identifizierenden/zu filternden TBI-Signal entsprechend gewählt wird (dem spektralen "Muster").

Ein Addierer 16 ist vorgesehen, um die Ausgaben der n Signalzweige aus Bandpassfilter 14/Verstärker 15 wieder zusammenzuführen. Die zusammengeführten Signale werden danach einem weiteren Verstärker 18 mit Diskriminator D zugeleitet, der aus dem spektral modulierten TBI-Signal eine entsprechende Ausgabe (hier durch die Rechteck-Signalfolge symbolisiert) der Verbrauchsdatensignale erzeugt, die der weiteren Auswertung mittels herkömmlicher Technik zugänglich ist.

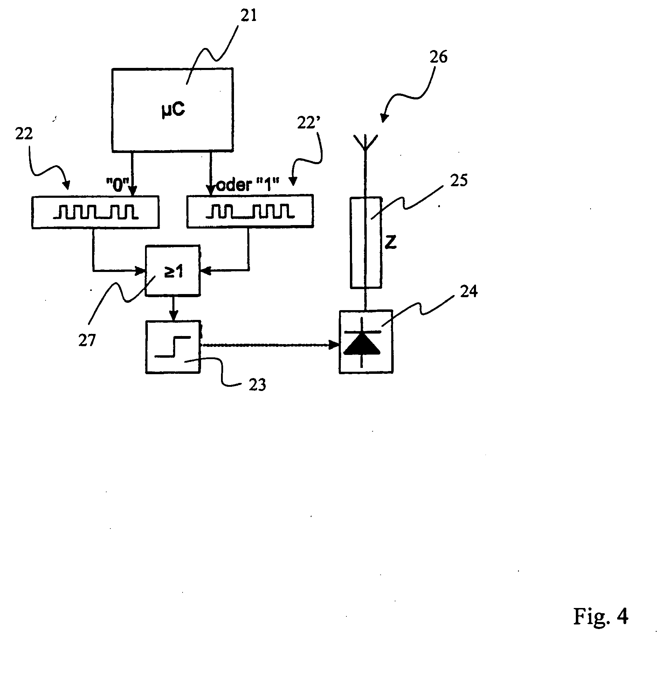

Fig. 4 zeigt eine Sendereinrichtung für trägerlose Basisband-Signale. Die Sendereinrichtung umfasst einen Mikrokontroller mit Steuereinheit 21, der Verbrauchsdaten empfangen kann, um diese weiterzuleiten. Dabei ist mit 22 eine Impulsfolge für eine logische Null, und mit 22' eine Impulsfolge für eine logische Eins dargestellt, wobei die Nullen und Einsen entsprechend zur Übermittlung/Kodierung der Verbrauchsdaten verwendet werden.

Die entsprechenden Impulsfolgen werden in einer Einrichtung 27 weiterverarbeitet, die mit einer ODER-Funktion implementiert ist. Die Einrichtung 27 ist mit einer optischen Triggereinrichtung 23 verbunden, welche wiederum einen Subnanosekundenschalter 24 ansteuert, bestehend etwa aus einer Avalanche-Diode oder einem Avalanche-Transistor, zur Erzeugung der spektral modulierten "Muster" für die Übertragung der Verbrauchsdaten. Über eine Impedanzanpassungs-Einrichtung bzw. einen Filter 25, welche(r) der Anpassung an die verwendete Antenne dient, wird das erzeugte spektrale Muster einer Breitbandantenne 26 zugeführt, welche schließlich dementsprechende TBI-Signale abstrahlt.

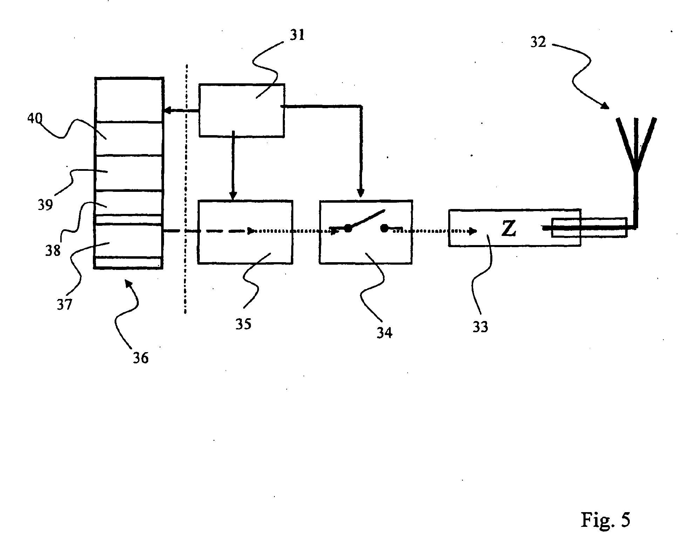

Fig. 5 zeigt den Aufbau einer Sendereinheitschematisch. Die Sendereinheit umfasst eine Energiequelle 31, wobei die Energieversorgungseinheit/-quelle 31 aktive Komponenten wie eine CPU 37, einen Modulator 35 und ein Subnanosekunden-Schaltmodul 34 mit Hilfsenergie versorgt. Weiter sind eine Breitbandantenne 32 für die breitbandigen TBI-Signale und ein Impedanz-Tuner/Filter 33 zur Anpassung an die Antenne 32 vorgesehen. Ein Subnanosekunden-Schaltmodul 34 erzeugt, angesteuert durch einen Modulator 38, die spektral modulierten Muster für die Verbrauchsdatenübertragung.

Die Verbrauchsdaten werden dem Modulator 35 zugeführt von
- Verbrauchszählern (HKV, WZ, WAZ, IZ), im Einzelnen: Heizkostenverteiler (HKV), Wärmezähler (WZ), Wasserzähler (WAZ) oder Impulszählmodule (IZ, zur Adaption an Stromzähler oder Gaszähler) bzw. ggf.
- Datensammlern/-speichern (DS), sofern Datensammler in einem eigenen Netzwerk bidirektional miteinander kommunizieren sollen.

Dabei umfassen die Verbrauchszähler bzw. Datensammler (DS), hier zusammenfassend allgemein mit 36 bezeichnet, jeweils eine CPU 37, einen Speicher 38 für Verbrauchsdaten, ein ID-Modul 39 zur Bereitstellung einer eindeutigen Identifikation des Moduls zur Zuordnung an Verbrauchsstellen und dergleichen, und eine Uhr (clock) 40 zur Zeitsteuerung.

Die vertikale gestrichelte Linie symbolisiert die prinzipielle funktionelle Trennung zwischen bestehender, gebräuchlicher Gerätetechnik der Branche (links) und der erfmdungsgemäßen Modulkombination zur Realisierung von TBI als Funkübertragungsverfahren (rechts). Durchgezogene Linien symbolisieren Energieversorgungswege, wohingegen gepunktete Linien Signalwege kennzeichnen.

Der Modulator 35 puffert standardmäßig erzeugte Bit-Sequenzen, die ihm zugehen, d.h.

Datentelegramme mit klassischen Datenraten bis zu 20 kBit und Telegrammlängen von typisch einigen 100 ms, und setzt diese Informationsketten in Kurzzeitimpulsfolgen um (typisch einige ns bis einige 10 ns). Der Modulator 35 übernimmt die logische Kodierung von Impulsflanken und/oder -folgen und die Triggerung des Subnanosekundenschaltmoduls 34. Das Subnanosekundenschaltmodul 34 übernimmt die logisch kodierte Triggerung und setzt sie auf Hardwareebene in eine Leistungsimpulsfolge um, ggf. kombiniert mit einer nachgeschalteten Verstärkereinheit, zur Erzeugung der spektral modulierten TBI-Signale.

Die Kombination Impedanz-Tuner/Filter 33 in Verbindung mit der Breitbandantenne 32 bildet ein angepasstes breitbandiges Abstrahlsystem, welches schwerpunktmäßig breitbandig auf den GHz-Bereich abgestimmt sein soll, wobei das Abstrahlsystem zur Abstrahlung der TBI-Signale dient.

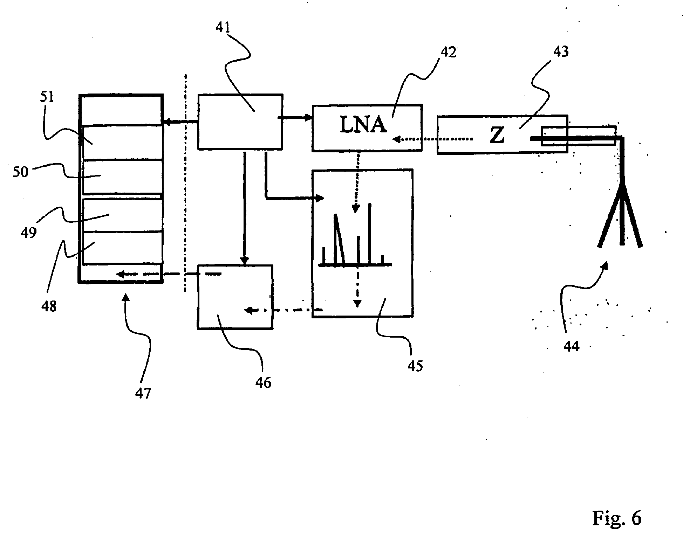

Fig. 6 zeigt den Aufbau einer Empfängereinheit schematisch. Die Empfängereinheit umfasst eine Energiequelle 41 zur Stromversorgung der aktiven Komponenten, und ein rauscharmes Verstärkermodul 42, welches die schwachen und breitbandigen TBI-Signale, die ihm von einem Empfangsuntersystem bestehend aus einem Impedanz-Tuner/Filter 43 sowie einer Breitbandantenne 44 zugehen, entsprechend verstärkt.

Ein FSA-Interpreter 45 mit einem Puffer (buffer) ist mit dem LNA 42 verbunden und vorgesehen zur Echtzeitanalyse des Spektrums der eingehenden Signale, d.h. dem Identifizieren bzw. Ausfiltern der spektral modulierten TBI-Signale. Ein damit verbundener Demodulator 46 erzeugt dann anschließend sequenzielle Telegramme, zur Weiterverarbeitung als binär kodierte Informationen.

Die Empfängereinheiten sind verbunden mit Datensammlern und Datenspeichern, im Einzelnen: Fest installierte Datensammler, mobile/tragbare Datensammlersysteme mit oder ohne Datenspeichereinheiten. Dabei umfassen Datensammler 47 (DS) eine CPU 48, einen Speicher 49 für Verbrauchsdaten, ein ID-Modul 50 zur eindeutigen Identifizierung und eine Uhr (clock) 51 zur Zeitsteuerung.

Die prinzipielle funktionelle Trennung zwischen bestehender, gebräuchlicher Gerätetechnik der Branche (links) (Datensammler DS) und der erfindungsgemäßen Modulkombination zur Realisierung von TBI als Funkübertragungsverfahren (rechts) (Empfängereinheit) wird durch die vertikale gestrichelte Linie symbolisiert.

Die Energieversorgungseinheit/-Quelle 41 versorgt alle aktiven Komponenten wie CPU 48, Demodulator 46, LNA 42 und FSA 45 mit Hilfsenergie. Die Kombination Impedanz-Tuner/Filter 43 in Verbindung mit der Breitbandantenne 44 bildet ein breitbandiges Empfangssystem, welches schwerpunktmäßig breitbandig auf den GHz-Bereich abgestimmt sein soll. Der rauscharme Eingangsverstärker, LNA 42 verstärkt das eingehende zeitliche Anregungssignal des Antennensystems um einige Größenordnungen, mit Präferenz auf weitestgehend möglicher statistischer Rauschunterdrückung.

Der FSA/Interpreter 45 übernimmt die zentrale Aufgabe der Echtzeit-Spektralanalyse des Frequenzspektrums und der hardwaregestützten Filterung der Information tragenden spektralen Anteile (beides auf Zeitskalen von Nanosekunden) und der Rück-Transformation der Informationsanteile in den Zeitbereich.

Der Demodulator 46 erzeugt die branchenüblichen sequenziellen Telegrammbotschaften, welche wiederum als binär kodierte Information auf einer Zeitskala im ms- bis s-Bereich weiterverarbeitet werden.

Bei verbrauchsabhängigen Abrechnungen von beispielsweise Wärme- oder Wasserkosten in Wohnungen oder gewerblich genutzten Räumen ist es im Allgemeinen üblich, die Verbrauchswerte einmal jährlich abzulesen. Die abgelesenen Werte werden von Hand notiert, in einem mobilen Rechner gespeichert oder per Modem ausgelesen und an ein Dienstleistungsunternehmen weitergeleitet, das sich auf die Erstellung von Verbrauchskostenrechnungen spezialisiert hat. Zusätzlich erhält das Dienstleistungsunternehmen Angaben über das Gesamtgebäude sowie Informationen, die die einzelnen Nutzer des Gebäudes betreffen.

Für die drahtlose Übermittlung der Verbrauchsdaten zwischen Verbrauchszähler und Datensammler (bzw. Ableser) haben sich zahlreiche Technologien etabliert. Diese Datenübermittlungstechnologien sollen eine möglichst hohe Zuverlässigkeit bieten und ebenfalls einen niedrigen Preis.

Im Allgemeinen basieren die drahtlosen Übertragungstechniken auf einem gemeinsamen Prinzip. Das zu übertragende Signal wird moduliert, dann anschließend mit Hilfe einer Antenne gesendet. Auf der Empfängerseite wird das Signal empfangen, entsprechend gefiltert und anschließend demoduliert, um das ursprüngliche Signal wiederzugewinnen. Auf der Sendeseite werden unterschiedliche Modulationsverfahren angewendet, wie beispielsweise Amplitudenmodulation oder Phasenmodulation.

Die drahtlose Datenübermittlung geschieht in einem relativen schmalen Frequenzband mit hoher Leistung, welche angepasst werden muss, um eine bestimmte Reichweite für eine vorgewählte Übertragungsgeschwindigkeit mit einer maximal erlaubten Fehlerrate zu überbrücken.

Anwendungen, die eine drahtlose Übertragung benötigen, wie zum Beispiel "Metering Anwendungen", wurden Frequenzbänder (z.B. 433MHz, 868MHz oder 2.4 GHz) behördlich zugewiesen, die lizenzfrei und somit kostenfrei benutzt werden können. Diese Frequenzbänder werden auch ISM-Bänder (Industrial Scientific Medical) genannt. Das Verhältnis *B_{w}*/*F*₀ kann als Maß für die relative Bandbreite genommen werden und beträgt für 868MHz mit *B_{w}* = 2.1 MHz und *Fₒ* = 869 MHz einen Wert von 2.41*10⁻³. Der Hauptvorteil dieser Schmalband-Techniken zur Datenübertragung ist, dass der Frequenzbereich geschützt ist und die Bauteile zu Realisierung kostengünstig sind.

Im Bereich des ISM-Bandes werden unter anderem die bekannten Bluetooth und WLAN Kommunikationstechniken eingesetzt, so dass im Allgemeinen zahlreiche Sender und Empfänger in den oben genannten Frequenzbereichen arbeiten.

Da das ISM-Band überfüllt ist, kann es leicht zu Störungen im drahtlosen Übertragungskanal zwischen Sender und Empfänger kommen, so dass eine zuverlässige Datenübertragung erschwert wird. Um eine sichere Übertragung zu ermöglichen, müsste die Sendeleistung erhöht werden oder durch aufwendigere Verfahren, die beispielsweise auf Software basieren, fehlertolerante und Fehler korrigierende Transportprotokolle entwickelt werden. Beide Maßnahmen erhöhen unverhältnismäßig die Kosten und sind somit wirtschaftlich nicht vertretbar.

Eine andere Möglichkeit zur Verbesserung dieser schmalbandigen Übertragungstechniken ist die Anwendung von aufwendigeren Verfahren, wie zum Beispiel DSSS (Direct Sequence Spread Spectrum)oder FH (Frequency Hopping). Diese Technologien sind technisch anspruchsvoll und aufwendig, benötigen viel Energie und sind teuer in der Ausführung, so dass sie keinen Einsatz im Bereich der Übertragung von Verbrauchsdaten (Metering Anwendung) finden können.

Ein anderes Problem der oben genannten Technologien ist die systembedingte Eigenschaft, dass eine Erhöhung der Übertragungsgeschwindigkeit eine Erhöhung der Sendeleistung nach sich zieht. Bei unveränderter Sendeleitung müssen entsprechend Einbußen in der Reichweite in Kauf genommen werden.

Aufgabe der vorliegenden Erfindung ist es, eine Vorrichtung bereitzustellen, welche eine zuverlässige drahtlose Datenübertragung sicherstellt, die insbesondere zwischen Heizkostenverteiler und Datensammler einsetzbar ist.

## Patentansprüche

1. Datensammler-Vorrichtung zur Funkübertragung von Wärme- und/oder Wasserverbrauchsdaten mit trägerloser Basisbandimpulsausbreitung TBI, umfassend:
- eine Verarbeitungseinrichtung (1) zur Verwaltung der Verbrauchsdaten und zur Steuerung der Vorrichtung;
- einen Speicher (2) zum Speichern der Verbrauchsdaten;
- ein Identifizierungsmodul (3), das einen Identifikationscode für die Identifizierung der Vorrichtung bereitstellt;
- ein TBI-Funkmodul (6), das die Verbrauchsdaten empfängt, wobei das TBI-Funkmodul (6) mit der Verarbeitungseinrichtung verbunden ist, wobei das TBI-Funkmodul (6) einen TBI-Empfänger umfasst, der die Verbrauchsdaten empfängt und speichert;
- ein Zeitsteuerungsmodul (5), das mit der Verarbeitungseinrichtung gekoppelt ist, zum Steuern des TBI-Funkmoduls (6); und
- ein Haupt-Funkmodul (4) zur Kommunikation mit einem Weitverkehrsnetz, zum Senden der in dem Speicher gespeicherten Verbrauchsdaten, wobei das Haupt-Funkmodul mit der Verarbeitungseinrichtung (1) verbunden ist, wobei das Haupt-Funkmodul ein GSM-Modul umfasst, das Verbrauchsdaten an ein GSM-Mobilfunknetzwerk weiterleitet.

2. Vorrichtung nach Anspruch 1, wobei das Identifizierungsmodul ein SIM-Modul umfasst.

3. Vorrichtung nach einem der vorhergehenden Ansprüche, umfassend eine Stromversorgung (7), die mit der Verarbeitungseinrichtung verbunden ist, wobei die Stromversorgung Batterien bzw. Akkus aufweist.

4. Vorrichtung nach einem der vorhergehenden Ansprüche, angepasst, um TBI-Signale aus einem metallischen Heizmedium- oder Wasserleitungsrohrsystem auszukoppeln, um das metallische Rohrsystem als Signal-Übertragungsmedium zu verwenden.

## Claims

1. A data collector device for radio transmission of heat and/or water consumption data with carrierless baseband pulse propagation CBPP consisting of:
- a processing mechanism (1) for managing consumption data and controlling the device;
- a memory (2) for storing consumption data;
- an identification module (3) that supplies an identification code for identification of the device;
- a CBPP radio module (6) that receives consumption data, wherein the CBPP radio module (6) is connected to the processing mechanism, wherein the CBPP radio module (6) includes a CBPP receiver, which receives and stores the consumption data;
- a time control module (5) that is linked to the processing mechanism for controlling the CBPP radio module (6); and
- a main radio module (4) for communicating with a wide area network, for transmitting the consumption data stored in the memory, wherein the main radio module is connected to the processing mechanism (1), wherein the main radio module includes a GSM module that transmits consumption data to a GSM mobile radio network.

2. The mechanism according to claim 1, wherein the identification module consists of an SIM module.

3. The mechanism according to one of the preceding claims, including a power supply (7) connected to the processing mechanism, wherein the power supply has rechargeable or disposable batteries.

4. The mechanism according to one of the preceding claims, adapted to decouple CBPP signals from a metal heating medium or water pipeline system, in order to use the metal pipe system as a signal transmission medium.

## Revendications

1. Dispositif de collecte de données pour la transmission de données de consommation d'eau et/ou de chauffage à l'aide d'un système de communication à bande ultra-large TBI comprenant :
- un dispositif de traitement (1) pour administrer les données de consommation et pour commander le dispositif ;
- une mémoire (2) pour mémoriser les données de consommation ;
- un module d'identification (3), qui fournit un code d'identification pour l'identification du dispositif ;
- un module radio TBI (6), qui reçoit les données de consommation, dans lequel le module radio TBI (6) est relié au dispositif de traitement, dans lequel le module radio TBI (6) comprend un récepteur TBI, qui reçoit et mémorise les données de consommation ;
- un module de commande temporelle (5), qui est couplé au dispositif de traitement, afin de commander le module radio TBI (6) ; et
- un module radio principal (4) à des fins de communication avec un réseau WAN, afin d'envoyer les données de consommation mémorisées dans la mémoire, dans lequel le module radio principal est relié au dispositif de traitement (1), dans lequel le module radio principal comprend un module GSM, qui transmet des données de consommation à un réseau radio mobile GSM.

2. Dispositif selon la revendication 1, dans lequel le module d'identification comprend un module SIM.

3. Dispositif selon une des revendications précédentes, comprend une alimentation en courant (7), qui est reliée au dispositif de traitement, dans lequel l'alimentation en courant présente des batteries, resp. des accumulateurs.

4. Dispositif selon une des revendications précédentes, adapté afin de découpler des signaux TBI provenant d'un système de canalisations métalliques d'eau ou de milieu chauffant et d'utiliser le système de canalisations métalliques comme medium de transmission de signaux.
